# EUROPÄISCHE PATENTSCHRIFT

(11) **EP 2 141 063 B1**
(45) Veröffentlichungstag und Bekanntmachung des Hinweises auf die Patenterteilung: **12.01.2011**
(21) Anmeldenummer: 09005610.2
(22) Anmeldetag: 22.04.2009
(51) Int. Cl.: B62D 13/06

(54) **Anhänger**
Trailer
Remorque

(30) Priorität: 01.07.2008 DE 102008031089
(43) Veröffentlichungstag der Anmeldung: 06.01.2010
(73) Patentinhaber: WABCO GmbH, 30453 Hannover (DE)
(72) Erfinder: Ronnenberg, Udo, 30900 Wedemark (DE); Stender, Axel, 31787 Hameln (DE)

(56) Entgegenhaltungen:
- DE-C1- 4 032 549
- US-A- 3 880 439

## Beschreibung

Die Erfindung betrifft eine Steuervorrichtung für eine Sperrvorrichtung eines Anhängers mit einer selbstlenkenden Lenkachse, die eingerichtet ist zum Erfassen, ob der Anhänger sich rückwärts bewegt, und bejahendenfalls zum Aktivieren eines Sperrelements zum Sperren der Lenkachse. Die Erfindung betrifft zudem einen Anhänger mit einer selbstlenkenden Lenkachse und einer Sperrvorrichtung, die eine solche Steuervorrichtung umfasst. Gemäß einem zweiten Aspekt betrifft die Erfindung ein Verfahren zum Betreiben eines Anhängers.

Steuervorrichtungen sind aus Anhängern beispielsweise für Lastkraftwagen oder für Landwirtschaftsfahrzeuge bekannt. Die selbstlenkende Lenkachse wird nicht aktiv gelenkt, sondern folgt einer durch eine gelenkte Gelenkachse vorgegebenen Richtung.

Nachteilig an bekannten Steuervorrichtungen ist, dass mit ihnen ausgestattete Anhänger schwierig zu manövrieren sind, insbesondere dann, wenn ein den Anhänger umfassender Lastzug aus einer nicht gerade gezogenen Position rückwärts gefahren werden soll.

DE 40 32 549 C1, die die Merkmale der Oberbegriffe der Ansprüche 1 und 17 offenenbert, betrifft eine Sperrvorrichtung zur Verriegelung der Räder einer Lenkachse für Fahrzeuganhänger bei Rückwärtsfahrt in Geradeausfahrstellung. Um eine Sperrvorrichtung zur Verriegelung der Räder einer Lenkachse für Fahrzeuganhänger bei Rückwärtsfahrt in Geradeausfahrstellung zu schaffen, welche die Lenkachse bei Rückwärtsfahrt unabhängig vom Zugfahrzeug selbständig in Geradeausfahrt arretiert, wird vorgeschlagen, daß in an sich bekannter Weise an mindestens einem Rad ein mitdrehender Impulsgeber und an einem Achskörper ein feststehender Impulsempfänger angeordnet sind und daß dem Impulsempfänger ein Drehrichtungsmelder nachgeschaltet ist, der die Drehrichtungsimpulse aufnimmt und in Sperr- oder Lösesignale für die Sperrvorrichtung umwandelt.

Der Erfindung liegt die Aufgabe zugrunde, die Manövrierbarkeit bei Lastzügen mit Anhängern zu verbessern.

Die Erfindung löst das Problem durch eine gattungsgemäße Steuervorrichtung, die eingerichtet ist zum Aktiviert-Halten des Sperrelements, bis ein vorgegebener Schwellenwert überschritten ist, der ein Ausmaß einer Vorwärtsbewegung des Anhängers beschreibt.

Gemäß einem zweiten Aspekt löst die Erfindung das Problem durch ein Verfahren zum Betreiben eines Anhängers mit den Schritten (i) Erfassen einer Rückwärtsbewegung des Anhängers und Aktivieren einer Sperrvorrichtung des Anhängers aufgrund der Rückwärtsbewegung, (ii) Erfassen einer auf die Rückwärtsbewegung folgenden Vorwärtsbewegung und (iii) Aktiviert-Halten der Sperrvorrichtung, bis ein vorgegebener Schwellenwert überschritten ist, der ein Ausmaß einer Vorwärtsbewegung des Anhängers beschreibt.

Vorteilhaft an der Erfindung ist, dass ein Vorwärtsfahren mit dem Anhänger nicht sofort dazu führt, dass die Sperrvorrichtung deaktiviert wird. Bei bekannten Anhängern führt bereits ein Ausschalten der Rückfahrscheinwerfer und damit insbesondere ein Vorwärtsfahren mit dem Anhänger dazu, dass die Sperrvorrichtung deaktiviert wird.

Die Steuervorrichtung ist im Einsatz Teil einer Sperrvorrichtung, die beispielsweise zwei ineinander verrastbare Rastelemente umfasst, die so angeordnet sind, dass die selbstlenkende Lenkachse genau dann gesperrt bzw. arretiert ist, wenn die beiden Rastelemente miteinander in Eingriff sind. Um die Lenkachse in ihrer Geradeaus-Richtung zu sperren, muss die Sperrvorrichtung aktiviert sein. Gleichzeitig muss die Lenkachse in Geradeaus-Richtung stehen. Bei Anhängern mit bekannten Steuervorrichtungen ist es nicht möglich, die Sperrvorrichtung durch Vorwärtsfahren in ihre Sperrlage zu bringen, weil die Sperrvorrichtung beim Vorwärtsfahren deaktiviert wird. Das führt dazu, dass die Sperrvorrichtung nur dann die Lenkachse sperren kann, wenn der Lastzug beim Rückwärtsfahren so bewegt wird, dass die selbstlenkende Lenkachse in ihre Geradeaus-Richtung gebracht wird. Das ist aber, besonders auf beengtem Raum, aufwändig.

Dadurch, dass die Steuervorrichtung eingerichtet ist zum Aktiviert-Halten des Sperrelements, bis der vorgegebene Schwellenwert überschritten ist, der das Ausmaß der Vorwärtsbewegung des Anhängers beschreibt, wird sichergestellt, dass der Anhänger ein gewisses Stück in Vorwärtsrichtung bewegt werden kann, ohne dass das Sperrelement deaktiviert wird. Dadurch kann das Sperrelement bereits dann einrasten, wenn das Zugfahrzeug sich vorwärts bewegt und die selbstlenkende Längsachse dabei in ihre Geradeaus-Position gelangt. Das vermindert die Fahrmanöver, die notwendig sind, bis die Sperrvorrichtung die selbstlenkende Lenkachse sperrt.

Es ist ein weiterer Vorteil der vorliegenden Erfindung, dass sie mit einfachen Mitteln implementierbar ist. Wenn die Steuervorrichtung gemäß einer bevorzugten Ausführungsform ausgebildet ist, um über einen Datenbus, beispielsweise einen CAN-Datenbus, mit dem Zugfahrzeug zu kommunizieren, so kann über diesen Datenbus erfasst werden, ob sich der Anhänger, in dem die Steuervorrichtung eingebaut ist, rückwärts bewegt. Die Steuervorrichtung muss dann lediglich so modifiziert werden, dass sie ein Sperrelement so ansteuert, dass es aktiviert gehalten bleibt, bis der vorgegebene Schwellenwert überschritten ist. Dazu muss lediglich die auf der Steuervorrichtung laufende Software geändert werden, was sehr einfach und kostengünstig möglich ist.

Im Rahmen der vorliegenden Beschreibung wird unter einer Sperrvorrichtung insbesondere jede Vorrichtung verstanden, die ausgebildet ist, um die Lenkachse in einer vorgegebenen Stellung, beispielsweise in einer Geradeaus-Stellung, festzulegen, so dass an der Lenkachse befestigte Räder nur in die vorgegebene Richtung, beispielsweise geradeaus, laufen können.

Die Sperrvorrichtung umfasst die Steuervorrichtung, die beispielsweise mit einer zentralen Steuerung in Verbindung steht und von der zentralen Steuerung Signale über den Bewegungszustand des Anhängers und/oder des Zugfahrzeugs empfängt. Die Steuervorrichtung kann, muss aber keine gesonderte Komponente sein. Es ist auch möglich, dass die Steuervorrichtung Teil einer größeren Steuerung ist oder dass die Funktionalität der Steuervorrichtung von der größeren Steuerung mit übernommen wird.

Unter dem Merkmal, dass die Steuervorrichtung eingerichtet ist zum Erfassen, ob der Anhänger sich rückwärts bewegt, wird insbesondere verstanden, dass die Steuervorrichtung einen Messwert oder Signal, insbesondere ein Bussignal, erfasst, so dass eine Aussage darüber möglich ist, ob der Anhänger sich rückwärts bewegt. Dazu kann die Steuervorrichtung beispielsweise ausgebildet sein, um ein entsprechend kodiertes Signal auf einem Datenbus einzulesen und zu dekodieren. Für das Erfassen ist aber beispielsweise schon ausreichend, wenn die Sperrvorrichtung eine Größe überwacht, mittels der auf ein Sichrückwärts-Bewegen des Anhängers geschlossen werden kann. Bevorzugt ist das ein elektrischer Strom zu einem Rückfahrscheinwerfer.

Darunter, dass die Steuervorrichtung eingerichtet ist zum Aktiviert-Halten des Sperrelements, ist zu verstehen, dass das Sperrelement in einem Zustand gehalten bleibt, in dem es entweder die selbstlenkende Lenkachse sperrt oder in einem solchen Zustand ist, dass die Lenkachse selbsttätig dann gesperrt wird, wenn sie in die Geradeaus-Richtung orientiert ist. Insbesondere ist unter dem Merkmal, dass bejahendenfalls das Sperrelement aktiviert wird, zu verstehen, dass das Sperrelement ausschließlich bejahendenfalls aktiviert wird, nicht aber verneinendenfalls.

Bevorzugt umfasst die Sperrvorrichtung, von der die Steuervorrichtung im Einsatz ein Teil ist, ein formschlüssig zusammenwirkendes Sperr-Teilelementpaars, das dann, wenn die Sperr-Teilelemente ineinander eingreifen, die Lenkachse sperrt. Die Sperrvorrichtung ist in diesem Fall aktiviert, wenn das Sperr-Teilelementpaar aufeinander vorgespannt ist. Beispielsweise ist ein Sperr-Teilelement ein Sperrbolzen und ein zweites Sperr-Teilelement eine Ausnehmung. Die Sperrvorrichtung arretiert die Lenkachse dann, wenn der Sperrbolzen in die Ausnehmung eingreift. Die Sperrvorrichtung ist dann aktiviert, wenn der Bolzen so vorgespannt ist, dass er in die Ausnehmung einrastet, wenn die Lenkachse in die vorgegebene Richtung, beispielsweise die Geradeaus-Richtung, zeigt. Ein Aktiviert-Halten bedeutet in diesem Fall ein Vorgespannt-Halten des Sperr-Teilelementpaars.

In einer bevorzugten Ausführungsform ist der vorgegebene Schwellenwert ein Geschwindigkeits-Schwellenwert für eine Geschwindigkeit des Anhängers in Vorwärtsrichtung. In diesem Fall ist die Steuervorrichtung so ausgebildet, dass die Sperrvorrichtung so lange aktiviert gehalten wird, wird bis der Anhänger in Vorwärtsrichtung dem vorgegebenen Geschwindigkeits-Schwellenwert, beispielsweise 5 km/h, überschreitet. Durch langsames Manövrieren kann ein Fahrer eines Lastzuges mit der erfindungsgemäßen Steuervorrichtung erreichen, dass die Sperrvorrichtung aktiviert gehalten wird, so dass die Lenkachse beim Geradeziehen durch Vorwärtsfahren automatisch in Geradeaus-Richtung einrastet. Sobald das Manöver abgeschlossen ist und der Lastzug eine Fahrt beginnt, überschreitet er den Geschwindigkeits-Schwellenwert und die Sperrvorrichtung löst die Lenkachse.

In einer bevorzugten Ausführungsform ist der vorgegebene Schwellenwert alternativ oder additiv ein Strecken-Schwellenwert für eine in Vorwärtsrichtung zurückgelegte Strecke. Diese Strecke kann beispielsweise durch einen Umdrehungssensor an Rädern des Anhängers erfasst werden, der mit der Sperrvorrichtung in Verbindung steht. Besonders bevorzugt ist der Strecken-Schwellenwert eine seit einem unmittelbar vorhergehenden Zurücksetzen des Anhängers zurückgelegte Strecke.

Alternativ oder additiv ist der vorgegebene Schwellenwert ein Zeit-Schwellenwert. Dieser Zeit-Schwellenwert kann beispielsweise unter 60 Sekunden betragen. Der Zeit-Schwellenwert bezieht sich als Beispiel auf eine Zeitspanne, die ab einem Zeitpunkt gemessen wird, ab dem ein Rückfahrscheinwerfer von einem aktiven in einen inaktiven Zustand geschaltet worden ist. Vorteilhaft hieran ist, dass ein derartiger Schwellenwert besonders einfach zu ermitteln ist. Besonders bevorzugt ist der Zeitschwellenwert eine Zeit, während der der Anhänger sich in Vorwärtsrichtung bewegt hat und nicht etwa still stand.

Das Erfassen, ob sich der Anhänger rückwärts bewegt, ist besonders einfach durchführbar, wenn es ein Erfassen, ob ein Rückfahrscheinwerfer aktiv ist, umfasst.

Besonders bevorzugt besitzt der Anhänger mindestens einen Anhänger-Rückfahrscheinwerfer, einen Bus zum Ansteuern des Anhänger-Rückfahrscheinwerfers und eine Bus-Schnittstelle zum Zugfahrzeug, wobei das Erfassen, ob der Rückfahrscheinwerfer aktiv ist, ein Erfassen eines über den Bus gesendeten Einschalt-Signals für den Anhänger-Rückfahrscheinwerfer umfasst. Vorteilhaft hieran ist, dass alle für das Betreiben der Sperrvorrichtung notwendigen Informationen am Anhänger selbst abgegriffen werden können. Dadurch kann der Anhänger bei jedem Zugfahrzeug verwendet werden.

Alternativ oder additiv kann auch erfasst werden, ob ein Zugfahrzeug-Rückfahrscheinwerfer des Zugfahrzeugs aktiviert worden ist.

Im Folgenden wird die Erfindung anhand der beigefügten Zeichnungen näher erläutert: Dabei zeigt
- Figur 1: eine schematische Ansicht eines erfindungsgemäßen Lastzugs mit einem erfindungsgemäßen Anhänger, der eine erfindungsgemäße Steuervorrichtung umfasst,
- Figur 2: ein Flussdiagramm eines erfindungsgemäßen Verfahrens, das auf erfindungsgemäßen Steuervorrichtung der Sperrvorrichtung imple- mentiert ist und
- Figur 3: eine schematische Ansicht eines erfindungsgemäßen Lastzugs mit einem erfindungsgemäßen Anhänger gemäß einer zweiten Ausfüh- rungsform.

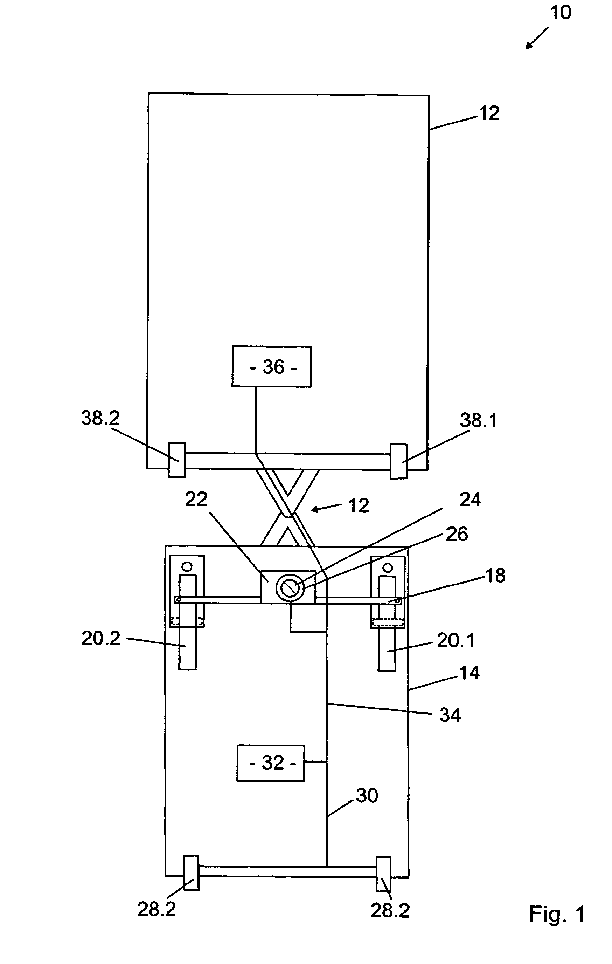

Figur 1 zeigt einen Lastzug 10 mit einem Zugfahrzeug 12 und einem erfindungsgemäßen Anhänger 14, die über eine Kupplung 16 miteinander verbunden sind. Der Anhänger 14 besitzt eine selbstlenkende Lenkachse 18, an der Räder 20.1 und 20.2 befestigt sind. Die Lenkachse 18 ist über eine schematisch eingezeichnete Sperrvorrichtung 22 in eine Geradeaus-Richtung, die in Figur 1 gezeigt ist, sperrbar.

Die Sperrvorrichtung 22 umfasst ein Sperr-Teilelement in Form eines Sperrbolzens 24, der mit einer Ausnehmung 26 zusammenwirkt. Durch Einschieben des Sperrbolzens 24, beispielsweise in die Ausnehmung 26 ist die Sperrvorrichtung 22 gesperrt und die Räder 20.1, 20.2 in die Geradeaus-Richtung arretiert.

Wenn die Räder 20.1, 20.2 nicht in Geradeaus-Richtung angeordnet sind, so ist der Sperrbolzen 24 magnetisch auf die Ausnehmung 26 vorspannbar, so dass er dann, wenn die Räder 20.1, 20.2 in Geradeaus-Richtung zeigen, in die Ausnehmung 26 einschnappt und die Lenkachse 18 damit sperrt.

Der Anhänger 14 umfasst zwei Anhänger-Rückfahrscheinwerfer 28.1, 28.2, die über einen ersten CAN-Bus 30 mit einer Steuervorrichtung 32 verbunden sind. Die Steuervorrichtung 32 ist ebenfalls Teil der Sperrvorrichtung 22 und ist ihrerseits über einen zweiten CAN-Bus 34 mit einer zentralen Steuerung 36 im Zugfahrzeug 12 verbunden. Die zentrale Steuerung 36 ist mit Zugfahrzeug-Rückfahrscheinwerfern 38.1, 38.2 verbunden und schaltet diese ein, wenn das Zugfahrzeug 12 rückwärts fährt. In diesem Fall sendet die zentrale Steuerung 36 einen Befehl an die Steuervorrichtung 32, so dass auch die Anhänger-Rückfahrscheinwerfer 28.1, 28.2 eingeschaltet werden.

Das Aktivieren der Anhänger-Rückfahrscheinwerfer 28.1, 28.2 und/oder der Zugfahrzeug-Rückfahrscheinwerfer 38.1, 38.2 führt dazu, dass die Steuervorrichtung 32, beispielsweise über den CAN-Bus 30 oder eine andere Leitung, die Sperrvorrichtung 22 in einen aktivierten Zustand bringt. In diesem Zustand ist der Sperrbolzen 24 auf die Ausnehmung 26 vorgespannt. Wenn der Sperrbolzen 24 noch nicht in die Ausnehmung 26 eingegriffen hat, so kann ein Fahrer des Lastzugs 10 das erreichen, indem er mit dem Zugfahrzeug 12 so fährt, dass die Lenkachse 18 in Geradeaus-Richtung kommt. Dazu kann er, wie im Stand der Technik üblich, rückwärts fahren, oder aber, wie erfindungsgemäß alternativ auch möglich, vorwärts fahren.

Nachdem einmal die Sperrvorrichtung 22 aktiviert worden ist, überwacht die Steuervorrichtung 32, ob die Zugfahrzeug-Rückfahrscheinwerfer 38.1, 38.2 oder die Anhänger-Rückfahrscheinwerfer 28.1, 28.2 über den jeweiligen CAN-Bus 30 bzw. 34 ausgeschaltet werden. Ist das zu einem Zeitpunkt t₁ der Fall, ermittelt die Steuervorrichtung 32 eine Zeitspanne At, die seit dem Ausschalten der Rückfahrscheinwerfer 28 bzw. 38 vergangen ist. Alternativ überwacht die Steuervorrichtung 32, ob die Zugfahrzeug-Rückfahrscheinwerfer 38.1, 38.2 oder die Anhänger-Rückfahrscheinwerfer 28.1, 28.2 nicht mehr mit einem zum Leuchten notwendigen elektrischen Strom beaufschlagt werden.

Die Steuervorrichtung 32 vergleicht diese Zeitspanne At mit einem Zeit-Schwellenwert t_{Schwelle} und hält die Sperrvorrichtung 22 aktiviert, so lange der Zeit-Schwellenwert t_{Schwelle} nicht überschritten ist. Setzt das Zugfahrzeug 12 vor Erreichen des Zeit-Schwellenwerts t_{Schwelle} erneut zurück, so bleibt die Sperrvorrichtung 22 aktiviert und die Zeitspanne wird auf Null gesetzt und beginnt erst dann wieder zu laufen, wenn die Rückfahrscheinwerfer 28, 38 wieder ausgeschaltet werden.

Alternativ oder additiv erfasst die Steuervorrichtung 32 eine Geschwindigkeit v des Zugfahrzeugs oder des Anhängers 14 und vergleicht diese mit einem Geschwindigkeits-Schwellenwert V_{Schwelle}. Die Steuervorrichtung 32 hält die Sperrvorrichtung 22 so lange aktiviert, bis der Geschwindigkeits-Schwellenwert V_{Schwelle} überschritten ist. Dazu kann die Steuervorrichtung 32 mit einem nicht eingezeichneten Geschwindigkeitssensor verbunden sein, der beispielsweise Umdrehungen eines der Räder 20.1, 20.2 erfasst.

Wiederum alternativ oder additiv erfasst die Steuervorrichtung 32 eine Strecke s, die der Anhänger 14 seit dem Ausschalten der Anhänger-Rückfahrscheinwerfer 28 zurückgelegt hat.

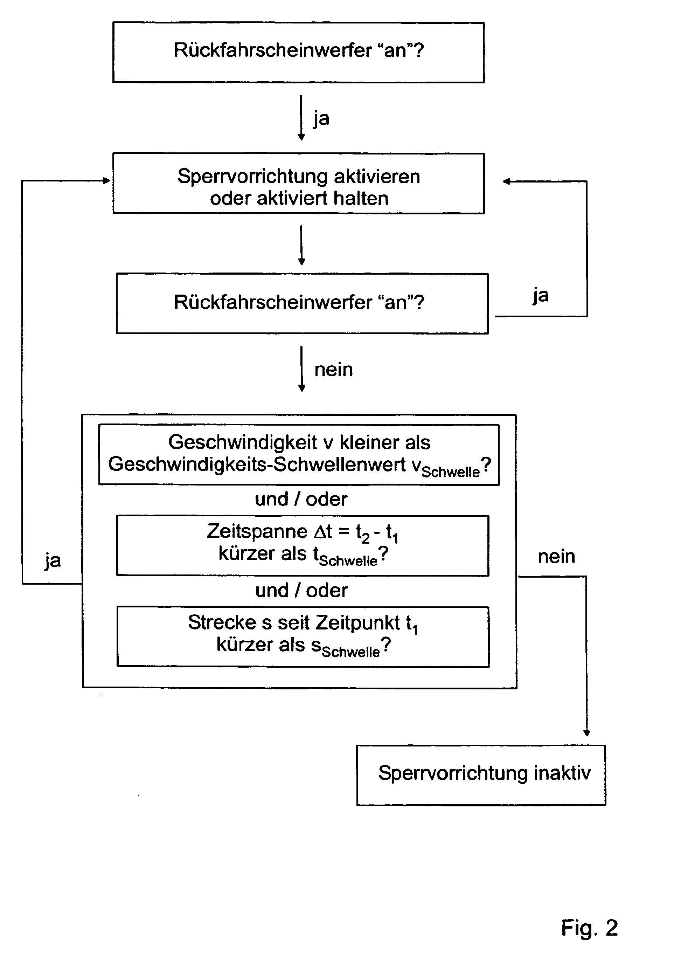

Figur 2 zeigt ein Flussdiagramm eines erfindungsgemäßen Verfahrens. Zunächst wird erfasst, ob Rückfahrscheinwerfer 28, 38 aktiv sind. Ist das der Fall, wird das Sperrelement aktiviert oder aktiviert gehalten. Die Sperrvorrichtung wird zumindest so lange aktiviert gehalten wie die Rückfahrscheinwerfer eingeschaltet sind. Werden die Rückfahrscheinwerfer anschließend wieder ausgeschaltet, beginnt eine Zeitmessung, bei der die Zeitspanne Δt für die Zeit nach dem Abschalten der Rückfahrscheinwerfer ermittelt wird. Sobald die Zeitspanne Δt den Zeit-Schwellenwert t_{Schwelle} überschreitet, wird die Sperrvorrichtung inaktiv geschaltet. Die Lenkachse 18 ist dann gelöst und kann frei bewegt werden.

Der Schwellenwert kann auch eine Kombination von logischen mit einander verknüpften Teil-Schwellenwerten sein. Beispielsweise kann der Schwellenwert dann überschritten sein, wenn einerseits die Zeitspanne Δt den Zeit-Schwellenwert t_{Schwelle} überschreitet oder andererseits die Geschwindigkeit v größer ist als der Geschwindigkeits-Schwellenwert und zudem die Strecke s kleiner als der Strecken-Schwellenwert v_{Schwelle}.

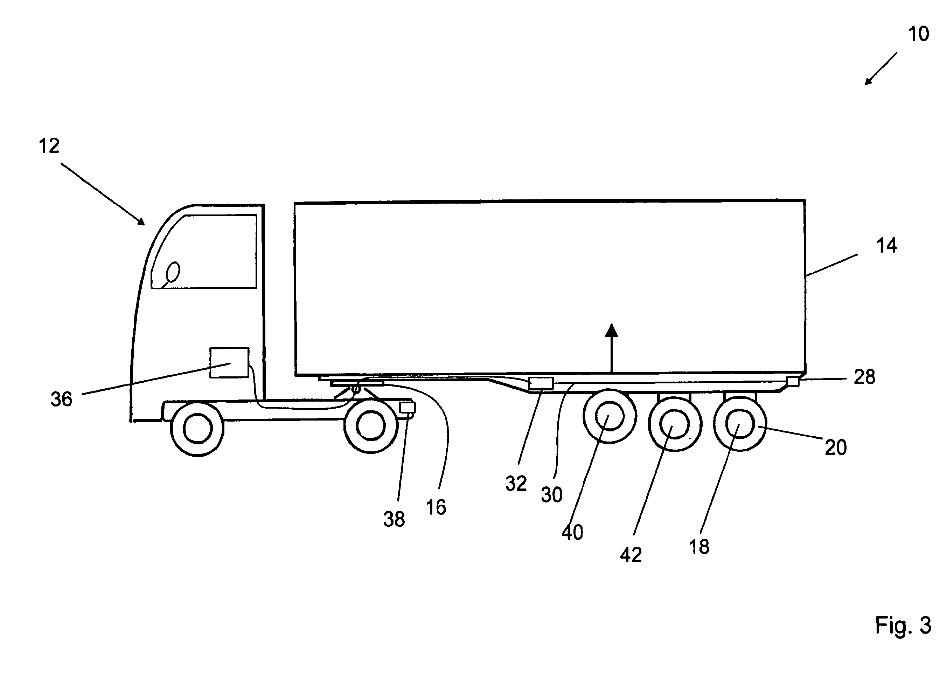

Figur 3 zeigt eine schematische Ansicht eines erfindungsgemäßen Lastzugs 10 gemäß einer bevorzugten Ausführungsform mit dem erfindungsgemäßen Anhänger 14. Der Anhänger 14 ist ein Sattelauflieger und besitzt neben einer Hinterachse in Form der Lenkachse 18 zwei weitere Hinterachsen 40 und 42, die zwischen der Lenkachse 18 und dem Zugfahrzeug 12 angeordnet sind. Die erste Hinterachse 40 ist eine Liftachse.

Die Steuervorrichtung 32 ist mit der zentralen Steuerung 36 verbunden und empfängt von dieser Signale, die den Bewegungszustand des Sattelaufliegers 14 charakterisieren, beispielsweise eine Umdrehungsgeschwindigkeit der Räder 20 oder eine Geschwindigkeit in Vorwärtsrichtung.

## Patentansprüche

1. Steuervorrichtung für eine Sperrvorrichtung (22) eines Anhängers (14) mit einer selbstlenkenden Lenkachse (18), die eingerichtet ist zum
(i) Erfassen, ob der Anhänger (14) sich rückwärts bewegt, und
(ii) bejahendenfalls Aktivieren eines Sperrelements (24, 26) zum Sperren der Lenkachse (18),
**dadurch gekennzeichnet, dass**
(c) die Steuervorrichtung (32) eingerichtet ist zum Aktiviert-Halten des Sperrelements (24, 26), bis ein vorgegebener Schwellenwert (t_{Schwelle}, s_{Schwelle}, v_{Schwelle}) überschritten ist, der ein Ausmaß einer Vorwärtsbewegung des Anhängers (14) beschreibt.

2. Steuervorrichtung nach einem der vorstehenden Ansprüche, **dadurch gekennzeichnet, dass** der vorgegebene Schwellenwert ein Geschwindigkeits-Schwellenwert (v_{Schwelle}) für eine Geschwindigkeit (v) des Anhängers (14) in Vorwärtsrichtung ist.

3. Steuervorrichtung nach einem der vorstehenden Ansprüche, **dadurch gekennzeichnet, dass** der vorgegebene Schwellenwert ein Strecken-Schwellenwert (S_{Schwelle}) für eine in Vorwärtsrichtung zurückgelegte Strecke (s) ist.

4. Steuervorrichtung nach Anspruch 3, **dadurch gekennzeichnet, dass** der Strecken-Schwellenwert eine seit einem unmittelbar vorhergehenden Zurücksetzen des Anhängers (14) zurückgelegte Strecke ist.

5. Steuervorrichtung nach einem der vorstehenden Ansprüche, **dadurch gekennzeichnet, dass** der vorgegebene Schwellenwert ein Zeit-Schwellenwert (t_{Schwelle}) ist.

6. Steuervorrichtung nach Anspruch 5, **dadurch gekennzeichnet, dass** der vorgegebene Zeit-Schwellenwert eine Zeitspanne (Δt) ist, während der der Anhänger (14) sich in Vorwärtsrichtung bewegt hat.

7. Steuervorrichtung nach einem der vorstehenden Ansprüche, **dadurch gekennzeichnet, dass** die Sperrvorrichtung eingerichtet ist zum Lösen der Lenkachse (18), wenn die Geschwindigkeit (v) in Vorwärtsrichtung den Schwellenwert überschreitet.

8. Steuervorrichtung nach einem der vorstehenden Ansprüche, **dadurch gekennzeichnet, dass** das Erfassen, ob der Anhänger (14) sich rückwärts bewegt, ein Erfassen, ob ein Rückfahrscheinwerfer (28, 38) aktiviert ist, umfasst.

9. Steuervorrichtung nach Anspruch 8, **dadurch gekennzeichnet, dass** der Zeit-Schwellenwert (tschwelle) eine Zeitspanne (At) ist, die seit einem Ausschalten des Rückfahrscheinwerfers (28, 38) verstrichen ist.

10. Anhänger mit
(a) einer selbstlenkenden Lenkachse (18) und
(b) einer Sperrvorrichtung (22), die eine Steuervorrichtung nach einem der vorstehenden Ansprüche umfasst.

11. Anhänger nach Anspruch 10, **dadurch gekennzeichnet, dass** die Sperrvorrichtung (22) ein formschlüssig zusammenwirkendes Sperr-Teilelementpaar (24,26) umfasst, das dann, wenn sie ineinander eingreifen, die Lenkachse (18) sperren, wobei die Sperrvorrichtung (22) aktiviert ist, wenn das Sperr-Teilelementpaar (24, 26) aufeinander vorgespannt ist.

12. Anhänger nach Anspruch 10 oder 11, **gekennzeichnet durch**
(a) mindestens einen Anhänger-Rückfahrscheinwerfer (28, 38),
(b) einen Bus (30) zum Ansteuern des mindestens einen Anhänger-Rückfahrscheinwerfers (28, 38) und
(c) eine Bus-Schnittstelle zum Zugfahrzeug (12),
(d) wobei die Steuervorrichtung so eingerichtet ist, dass das Erfassen, ob der Rückfahrscheinwerfer aktiviert ist, ein Erfassen eines über den Bus (30) gesendeten Einschaltsignals für den Anhänger-Rückfahrscheinwerfer (28) umfasst.

13. Anhänger nach einem der Ansprüche 10 bis 12, **dadurch gekennzeichnet, dass** die Steuervorrichtung so eingerichtet ist, dass das Erfassen, ob der Rückfahrscheinwerfer (28,38) aktiviert ist, ein Erfassen eines über den Bus (30, 34) gesendeten Einschaltsignals für einen Zugfahrzeug-Rückfahrscheinwerfer (38) des Zugfahrzeugs umfasst.

14. Anhänger nach einem der Ansprüche 10 bis 13, **dadurch gekennzeichnet, dass** die Sperrvorrichtung (22) pneumatisch betätigt ist.

15. Anhänger nach einem der Ansprüche 10 bis 14, **dadurch gekennzeichnet, dass** die Steuervorrichtung (32) Teil eines elektronischen Bremssystems (EBS) des Anhängers (14) ist.

16. Lastzug mit einem Anhänger (14) nach einem der Ansprüche 10 bis 15.

17. Verfahren zum Betreiben eines Anhängers mit
(a) einer Kupplung (16) zum Verbinden mit einem Zugfahrzeug (12),
(b) einer selbstlenkenden Lenkachse (18) und
(c) einer Sperrvorrichtung (22) zum Sperren der Lenkachse (18),
mit den Schritten:
(i) Erfassen einer Rückwärtsbewegung des Anhängers (14) und Aktivieren der Sperrvorrichtung (22) aufgrund der Rückwärtsbewegung,
(ii) Erfassen einer auf die Rückwärtsbewegung folgenden Vorwärtsbewegung,
**gekennzeichnet durch** den Schritt:
(iii) Aktiviert-Halten der Sperrvorrichtung, bis ein vorgegebener Schwellenwert t_{Schwelle},s_{Schwelle}, v_{Schwelle}) überschritten ist, der ein Ausmaß einer Vorwärtsbewegung des Anhängers (14) beschreibt.

18. Verfahren nach Anspruch 17, mit dem Schritt:
- Erfassen einer Zeitspanne (Δt) ab einem Beginn der Vorwärtsbewegung,
- wobei der Schwellenwert ein Zeit-Schwellenwert (t_{Schwelle}) ist.

## Claims

1. Control device for a locking device (22) for a trailer (14) having a self-steering steering axle (18) which is configured to
(i) detect whether the trailer (14) is moving backwards and
(ii) if this is the case, to activate a locking element (24, 26) for locking the steering axle (18),
**characterized in that**
(c) the control device (32) is configured to keep the locking element (24, 26) activated until a predefined threshold value (t_{threshold}, s_{threshold}, v_{threshold}), which describes a degree of forward movement of the trailer (14), is exceeded.

2. Control device according to one of the preceding claims, **characterized in that** the predefined threshold value is a velocity threshold value (v_{threshold}) for a velocity (v) of the trailer (14) in the forward direction.

3. Control device according to one of the preceding claims, **characterized in that** the predefined threshold value is a route section threshold value (s_{threshold}) for a route section (s) which has been travelled through in the forward direction.

4. Control device according to Claim 3, **characterized in that** the route section threshold value is a route section which has been travelled through since directly preceding resetting of the trailer (14).

5. Control device according to one of the preceding claims, **characterized in that** the predefined threshold value is a time threshold value (t_{threshold}).

6. Control device according to Claim 5, **characterized in that** the predefined time threshold value is a time period (Δt) during which the trailer (14) has moved in the forward direction.

7. Control device according to one of the preceding claims, **characterized in that** the locking device is configured to release the steering axle (18) when the velocity (v) in the forward direction exceeds the threshold value.

8. Control device according to one of the preceding claims, **characterized in that** the detection whether the trailer (14) is moving backwards comprises detection whether a reversing headlight (28, 38) is activated.

9. Control device according to Claim 8, **characterized in that** the time threshold value (t_{threshold}) is a time period (Δt) which has passed since the reversing headlight (28, 38) was switched off.

10. Trailer having
(a) a self-steering steering axle (18) and
(b) a locking device (22) which comprises a control device according to one of the preceding claims.

11. Trailer according to Claim 10, **characterized in that** the locking device (22) comprises a locking sub-element pair (24, 26) which interact in a positively locking fashion and lock the steering axle (18) when they engage one in the other, wherein the locking device (22) is activated when the locking sub-element pair (24, 26) are pre-stressed with respect to one another.

12. Trailer according to Claim 10 or 11, **characterized by**
(a) at least one trailer reversing headlight (28, 38),
(b) a bus (30) for activating the at least one trailer reversing headlight (28, 38), and
(c) a bus interface with the towing vehicle (12),
(d) wherein the control device is configured in such a way that the detection whether the reversing headlight is activated comprises detection of a switch-on signal, transmitted via the bus (30), for the trailer reversing headlight (28).

13. Trailer according to one of Claims 10 to 12, **characterized in that** the control device is configured in such a way that the detection whether the reversing headlight (28, 38) is activated comprises detection of a switch-on signal, transmitted via the bus (30, 34), for a towing vehicle reversing headlight (38) of the towing vehicle.

14. Trailer according to one of Claims 10 to 13, **characterized in that** the locking device (22) is activated pneumatically.

15. Trailer according to one of Claims 10 to 14, **characterized in that** the control device (32) is part of an electronic brake system (EBS) of the trailer (14).

16. Tractor-trailer combination having a trailer (14) according to one of Claims 10 to 15.

17. Method for operating a trailer having
(a) a coupling (16) for connecting to a towing vehicle (12),
(b) a self-steering steering axle (18) and
(c) a locking device (22) for locking the steering axle (18),
having the steps:
(i)detection of a reversing movement of the trailer (14) and activation of the locking device (22) on the basis of the reversing movement,
(ii) detection of a forward movement following the reversing movement,
**characterized by** the step:
(iii)keeping the locking device activated until a predefined threshold value (t_{threshold}, s_{threshold}, v_{threshold}), which describes a degree of forward movement of the trailer (14), is exceeded.

18. Method according to Claim 17, having the step:
- detection of a time period (Δt) starting from a start of the forward movement,
- wherein the threshold value is a time threshold value (t_{threshold}).

## Revendications

1. Dispositif de commande pour un dispositif de blocage (22) d'une remorque (14) comprenant un essieu orientable (18) autovireur qui est conçu pour
(i) détecter si la remorque (14) se déplace en marche arrière et
(ii) dans l'affirmative, activer un élément de blocage (24, 26) pour bloquer l'essieu orientable (18),
**caractérisé en ce que**
(c) le dispositif de commande (32) est conçu pour maintenir l'élément de blocage (24, 26) activé jusqu'à ce qu'une valeur de seuil prédéfinie (t_{Schwelle}, S_{Schwelle}, V_{Schwelle}) soit dépassée, laquelle décrit une amplitude d'un mouvement en marche avant de la remorque (14).

2. Dispositif de commande selon la revendication précédente, **caractérisé en ce que** la valeur de seuil prédéfinie est une valeur de seuil de vitesse (v_{Schwelle}) pour une vitesse (v) de la remorque (14) en marche avant.

3. Dispositif de commande selon l'une des revendications précédentes, **caractérisé en ce que** la valeur de seuil prédéfinie est une valeur de seuil de trajet (S_{Schwelle}) pour un trajet (s) parcouru en marche avant.

4. Dispositif de commande selon la revendication 3, **caractérisé en ce que** la valeur de seuil de trajet est un trajet parcouru depuis un recul immédiatement précédent de la remorque (14).

5. Dispositif de commande selon l'une des revendications précédentes, **caractérisé en ce que** la valeur de seuil prédéfinie est une valeur de seuil de temps (t_{Schwelle}).

6. Dispositif de commande selon la revendication 5, **caractérisé en ce que** la valeur de seuil de temps prédéfinie est un intervalle de temps (Δt) pendant lequel la remorque (14) s'est déplacée en marche avant.

7. Dispositif de commande selon l'une des revendications précédentes, **caractérisé en ce que** le dispositif de blocage est conçu pour libérer l'essieu orientable (18) lorsque la vitesse (v) en marche avant dépasse la valeur de seuil.

8. Dispositif de commande selon l'une des revendications précédentes, **caractérisé en ce que** la détection du déplacement en marche arrière de la remorque (14) inclut une détection de l'activation d'un phare de recul (28, 38).

9. Dispositif de commande selon la revendication 8, **caractérisé en ce que** la valeur de seuil de temps (t_{Schwelle}) est un intervalle de temps (Δt) qui s'est écoulé depuis une mise hors circuit du phare de recul (28, 38).

10. Remorque comprenant
(a) un essieu orientable (18) autovireur et
(b) un dispositif de blocage (22) qui inclut un dispositif de commande selon l'une des revendications précédentes.

11. Remorque selon la revendication 10, **caractérisée en ce que** le dispositif de blocage (22) inclut une paire d'éléments partiels de blocage (24, 26) qui agit par engagement géométrique et qui, lorsqu'ils s'engagent l'un dans l'autre, bloquent l'essieu orientable (18), le dispositif de blocage (22) étant activé lorsque la paire d'éléments partiels de blocage (24, 26) est mutuellement précontrainte.

12. Remorque selon la revendication 10 ou 11, **caractérisée par**
(a) au moins un phare de recul (28, 38) de remorque,
(b) un bus (30) pour commander l'au moins un phare de recul (28, 38) de remorque et
(c) une interface de bus vers le véhicule de traction (12),
(d) le dispositif de commande étant conçu de telle sorte que la détection de l'activation du phare de recul inclut une détection d'un signal de mise en marche du phare de recul (28, 38) de remorque envoyé par le biais du bus (30).

13. Remorque selon l'une des revendications 10 à 12, **caractérisée en ce que** le dispositif de commande est conçu de telle sorte que la détection de l'activation du phare de recul (28, 38) inclut une détection d'un signal de mise en marche d'un phare de recul (38) du véhicule de traction envoyé par le biais du bus (30, 34).

14. Remorque selon l'une des revendications 10 à 13, **caractérisée en ce que** le dispositif de blocage (22) est à commande pneumatique.

15. Remorque selon l'une des revendications 10 à 14, **caractérisée en ce que** le dispositif de commande (32) fait partie d'un système de freinage électronique (EBS) de la remorque (14).

16. Train routier comprenant une remorque (14) selon l'une des revendications 10 à 15.

17. Procédé d'exploitation d'une remorque comprenant
(a) un accouplement (16) pour la liaison avec un véhicule de traction (12),
(b) un essieu orientable (18) autovireur et
(c) un dispositif de blocage (22) pour bloquer l'essieu orientable (18),
comprenant les étapes suivantes :
(i) détection d'un mouvement de marche arrière de la remorque (14) et activation du dispositif de blocage (22) en raison du mouvement de marche arrière,
(ii) détection d'un mouvement de marche avant qui suit le mouvement de marche arrière,
**caractérisé par** l'étape :
(iii) arrêt activé du dispositif de blocage jusqu'à ce qu'une valeur de seuil prédéfinie (t_{Schwelle}, S_{Schwelle}, V_{Schwelle}) soit dépassée, laquelle décrit une amplitude d'un mouvement en marche avant de la remorque (14).

18. Procédé selon la revendication 17, comprenant l'étape suivante :
- détection d'un intervalle de temps (Δt) depuis le début du mouvement en marche avant ;
- la valeur de seuil étant une valeur de seuil de temps (t_{Schwelle}).
